# EUROPEAN PATENT SPECIFICATION

(11) **EP 1 703 958 B1**
(45) Date of publication and mention of the grant of the patent: **26.01.2011**
(21) Application number: 04813908.3
(22) Date of filing: 09.12.2004
(51) Int. Cl.: B01D 19/04

(54) **GRANULATED FOAM CONTROL AGENTS**
GRANULIERTE SCHAUMREGULIERUNGSMITTEL
AGENTS DE REGULATION DE LA MOUSSE GRANULAIRE

(30) Priority: 17.12.2003 GB 0329192
(43) Date of publication of application: 27.09.2006
(73) Proprietor: Dow Corning Corporation, Midland, MI 48686-0994 (US)
(72) Inventor: DELBRASSINNE, Pascal, BE-1330 Rixensart (BE); HILBERER, Alain, F-59245 Recquignies (FR); SAWICKI, George C., Penarth, Vale of Glamorgan CF64 2WE (GB)
(74) Representative: Gillard, Richard Edward
(86) International application number: PCT/US2004/041656
(87) International publication number: WO 2005/058455

(56) References cited:
- EP-A- 1 075 863
- EP-A- 1 167 456
- US-B1- 6 656 975

## Description

This invention is concerned with granulated foam control agents for use in aqueous compositions which are liable to foam. The foam control agents of the invention can be added to detergent compositions, particularly detergent powders, to inhibit excessive foaming when the detergent is used in washing.

In many aqueous systems which are used e.g. in food processes, textile dyeing, paper production, sewage treatment and cleaning applications, the production of foam needs to be controlled or prevented. It is important to keep the foam formation to an acceptable level when laundering is performed in automatic washing machines, especially front loading machines. Excessive foam would cause overflow of the washing liquor onto the floor as well as reduction in the efficiency of the laundering operation itself. There is a move in the detergent industry towards the use of detergent compositions which will perform to a higher efficiency than hitherto. There is a need to control foam from e.g. increased surfactant levels in the detergent compositions, use of surfactants which have a higher foam profile than traditional surfactants and changing laundering conditions. It is desirable to keep the addition level of foam control compositions to a minimum. There has therefore arisen a need to develop more efficient foam control compositions for incorporation into detergent compositions.

The most successful foam control agents, especially for detergents, are based on silicones. Examples are described in US-A-5767053, US-A-6521586 and US-A-5387364. US-A-6521587 describes a foam control agent, comprising an organopolysiloxane material having at least one silicon-bonded aralkyl substituent, a water-insoluble organic fluid, an organosilicon resin and a hydrophobic filler. It is preferred that the water-insoluble organic fluid is miscible with the organopolysiloxane fluid at the operating temperature of the foam control agent.

There has been some demand for foam control agents containing a reduced amount of organopolysiloxane. US-A-5693256 describes a foam control agent comprising 100 parts by weight of a water-insoluble organic liquid, from 0.1 to 20 parts by weight of a first hydrophobic filler and 0.1 to 20 parts by weight of a second hydrophobic filler, which may be a siloxane resin, said hydrophobic fillers being insoluble in the water- insoluble organic liquid. EP-B-687724 describes a foam control agent comprising 100 parts by weight of a water-insoluble organic liquid, from 0.1 to 20 parts by weight of a hydrophobic filler that is insoluble in the organic liquid and 0.1 to 20 parts by weight of an organosilicon resin that is at least partially soluble in the organize liquid.

WO97/34983 describes a granular antifoam mixture that contains a foam controlling active substance consisting of 70-95% paraffin wax mixture and 5-30% ethylenebisstearamide (LBSA). The paraffin wax mixture is solid at room temperature and at least 35% by weight and less than 100% by weight becomes liquid at 40C. This composition is claimed to give improved foam regulating effectiveness in cold and medium water temperature washing conditions.
US 6,656,975 describes a silicone composition having a continuous phase of a polar organic liquid including particles of a silicone active material encapsulated within an organic encapsulating material.
EP 1 075 863 describes a foam control agent, comprising an organopolysiloxane material having at least one silicon-bonded substituent, a water-insoluble organic fluid, an organosilicon resin and a hydrophobic filler, wherein the foam control agent may be useful as a detergent foam control agent.

A granulated foam control agent according to the invention comprises: a foam control composition comprising (i) a non-silicon-containing organic liquid selected from the group consisting of hydrocarbon oils and vegetable oils, (ii) a branched siloxane resin, (iii) a particulate filler which is insoluble in the organic liquid, (iv) an additive composition comprising a polyol ester which is a polyol substantially fully esterified by carboxylate groups each having 7 to 36 carbon atoms; a particulate carrier supporting the foam control composition; and a water soluble or water-dispersible binder deposited on the particulate carrier.

The non-silicon-containing organic liquid can for example be a liquid hydrocarbon oil or a liquid vegetable oil. It may be a single liquid or it may be a mixture of one or more such liquids. At least part of the organic liquid should be liquid at 40°C and the organic liquid is preferably liquid at 25°C.

Preferred liquid hydrocarbon oils are mineral oils, especially hydrogenated mineral oil or white oil, or isoparaffinic oils. The hydrocarbon oil preferably has an aromatic content of less than 10% by weight. Examples of liquid hydrocarbon oils which are not fully liquid at 25°C but are liquid at higher temperatures are petroleum jelly or Vaselinc®.

Examples of vegetable oils which can be used as the non-silicon-containing organic liquid include peanut oil, coconut oil, olive oil, cottonseed oil, rapeseed oil and linseed oil.

The branched siloxane resin preferably consists of siloxane units of the formula R'ₐSiO_{4-a/2} wherein R' denotes a hydroxyl, hydrocarbon or hydrocarbonoxy group, and wherein *a* has an average value of from 0.5 to 2.4. It preferably consists of monovalent trihydrocarbonsiloxy (M) groups of the formula R"₃SiO_{1/2} and tetrafunctional (Q) groups SiO_{4/2} wherein R" denotes a monovalent hydrocarbon group. The number ratio of M groups to Q groups is preferably in the range 0.4:1 to 2.5:1 (equivalent to a value of a in the formula R'ₐSiO_{4-a/2} of 0.86 to 2.15), more preferably 0.4:1 to 1.1:1 and most preferably 0.5:1 to 0.8:1
(equivalent to a=1.0 to a=1.33). The branched siloxane resin is preferably a solid at room temperature. The molecular weight of the resin can be increased by condensation, for example by heating in the presence of a base. The base can for example be an aqueous or alcoholic solution of potassium hydroxide or sodium hydroxide, e.g. a solution in methanol or propanol. A resin comprising M groups, trivalent R"SiO_{3/2} (T) units and Q units can alternatively be used, or up to 20% of units in the branched siloxane resin can be divalent units R"₂SiO_{2/2}. The group R" is preferably an alkyl group having 1 to 6 carbon atoms, for example methyl or ethyl, or can be phenyl. It is particularly preferred that at least 80%, most preferably substantially all, R" groups present are methyl groups. The resin may be a trimethyl-capped resin. Other hydrocarbon groups may also be present, e.g. alkenyl groups present for example as dimethylvinylsilyl units, most preferably not exceeding 5% of all R" groups. Silicon bonded hydroxyl groups and/or alkoxy, e.g. methoxy, groups may also be present.

The branched siloxane resin is preferably present at least 1%, more preferably at least 2% by weight based on the organic liquid, up to 40%, preferably up to 20%. For most antifoam uses it is preferred that the branched siloxane resin is present at 2 to 10% by weight based on the organic liquid.

The particulate filler is generally solid at 100°C and can for example be silica, preferably with a surface area as measured by BET measurement of at least 50 m²/g., titania, ground quartz, alumina, an aluminosilicate, an organic wax, e.g. polyethylene wax or microcrystalline wax, zinc oxide, magnesium oxide, a salt of an aliphatic carboxylic acids, a reaction product of an isocyanate with an amine, e.g. cyclohexylamine, or an high melting (above 100°C) alkyl amide such as ethylenebisstearamide or methylenebisstearamide. Mixtures of two or more of these can be used. The filler is preferably hydrophobic. Some of the fillers mentioned above are not hydrophobic in nature, but can be used if made hydrophobic. This could be done either in situ (i.e. when dispersed in the organic liquid), or by pre-treatment of the filler prior to mixing with the organic liquid. A preferred filler is silica which is made hydrophobic. Preferred silica materials are those which are prepared by heating, e.g. fumed silica, or precipitation. The silica filler may for example have an average particle size of 0.5 to 50µm, preferably 2 to 30 and most preferably 5 to 25µm. It can be made hydrophobic by treatment with a fatty acid, but is preferably done by the use of methyl substituted organosilicon materials such as dimethylsiloxane polymers which are end-blocked with silanol or silicon-bonded alkoxy groups, hexamethyldisilazane, hexamethyldisiloxane or organosilicon resins containing (CH₃)₃SiO_{1/2} groups. Hydrophobing is generally carried out at a temperature of at least 100°C. Mixtures of fillers can be used, for example a highly hydrophobic silica filler such as that sold under the Trade Mark 'Sipernat D10' can be used together with a partially hydrophobic silica such as that sold under the Trade Mark 'Aerosil R972'.

The amount of hydrophobic filler in the foam control composition of the invention is preferably 0.5-50% by weight based on the organic liquid, more preferably from 1 up to 10 or 15% and most preferably 2 to 8%.

The polyol ester is a substantially non-polar organic material which is miscible with the organic liquid. By 'miscible', we mean that materials in the liquid phase (i.e., molten if necessary) mixed in the proportions in which they arc present in the foam control composition do not show phase separation. This can be judged by the clarity of the liquid mixture in the absence of any filler or resin. If the liquids are miscible the mixture is clear and remains as one phase. If the liquids arc immiscible the mixture is opaque and separates into two phases upon standing. The polyol ester preferably has a melting point of at least 45°C. The polyol ester generally enhances the effectiveness of foam control achieved by the blend of organic liquid, branched siloxane resin and particulate filler.

The polyol ester is a polyol substantially fully esterified by carboxylate groups each having 7 to 36 carbon atoms.

The polyol ester is preferably a glycerol triester or an ester of a higher polyol such as pentaerythritol or sorbitol, but can be a diester of a glycol such as ethylene glycol or propylene glycol, preferably with a fatty acid having at least 14 carbon atoms, for example ethylene glycol distearate. Examples of preferred glycerol triesters are glycerol tripalmitate, which is particularly preferred, glycerol tristearate and glycerol triesters of saturated carboxylic acids having 20 or 22 carbon atoms such as that sold under the Trade Mark 'Synchrowax HRC'. Alternative suitable polyol esters are esters of pentaerythritol such as pentaerythritol tetrabehenate and pentacrythritol tetrastearate. The polyol ester can advantageously contain fatty acids of different chain length, which is common in natural products. Most preferably the 22 carbon atoms. By "substantially fully esterified" we mean that for a diol such as ethylene glycol or a triol such as glycerol, at least 90% and preferably at least 95% of the hydroxyl groups of the polyol arc esterified. Higher polyols, particularly those such as pentaerythritol which show steric hindrance, may be "substantially fully esterified" when at least 70 or 75% of the hydroxyl groups of the polyol are esterified; for example pentaerythritol tristearate has the effect of a fully esterified polyol ester. The additive composition can comprise a mixture of polyol esters, for example a mixture containing carboxylate groups of different carbon chain length such as glyceryl tristearate and glyceryl tripalmitate, or glyceryl tristearate and Synchrowax . HRC, or ethylene glycol distearate and Synchrowax HRC. Foam control compositions containing mixtures of two polyol esters in the additive composition may give greater foam control efficiency than compositions containing either polyol ester alone as the additive.

In general, each of the different types of non-polar organic material of melting point 35 to 100°C can be used with each type of organic liquid. For example a hydrocarbon wax can be used with a liquid hydrocarbon oil. The resulting composition contains the ingredients defined in WO97/34983 with the addition of a branched siloxane resin. We have found that the branched silicone resin significantly enhances the foam control achieved by the composition. A polyol ester can be used with a liquid hydrocarbon oil, branched siloxane resin and hydrophobic filler, and this composition also shows enhanced foam control compared to the compositions of WO97/34983. Similarly a polyol ester can be used with a liquid vegetable oil.

The blend of organic liquid, branched siloxane resin, particulate filler and polyol ester may further contain a component which contains groups more polar than the groups present in the polyol ester non-polar organic material. The more polar group preferably contains an active hydrogen atom, that is one liable to undergo hydrogen bonding. Examples of more polar groups are unesterified -OH groups (alcohol or phenol groups), unesterifed -COOH groups, amide groups or amino groups. The more polar component may have a melting point of at least 35°C, for example in the range 45-110°C, or may have a lower melting point, for example it may be liquid provided that the mixture of the non-polar and more polar components has a melting point of at least 35°C. The more polar component is preferably miscible with the polyol ester and may also be miscible with the liquid hydrocarbon polymer. Examples of more polar components arc fatty alcohols, ethoxylated fatty alcohols, ethoxylated fatty acids, ethoxylated alkyl phenols and partial esters of polyols such as monoesters or diesters of glycerol and a carboxylic acid having 8 to 30 carbon atoms, for example glycerol monostearate, sorbitan monostearate, glycerol monolaurate or glycerol distearate, and mixtures thereof, alkyl phenols having one or more alkyl substituent and preferably containing a total of 6 to 12 carbon atoms in the alkyl substituent or substituents attached to the phenol nucleus, for example octylphenol or nonylphenol or di(t-butyl)phenol, fatty acids having 8 to 36 carbon atoms, for example stearic acid, palmitic acid, behenic acid, oleic acid and/or 12-hydroxystearic acid, monoamides of fatty acids having 12 to 36 carbon atoms, for example stearamide, or alkyl amines having 8 to 30 carbon atoms.

The polyol ester and the more polar component can be present in weight ratio 5:95 to 95:5.

The additive composition, comprising the polyol ester and optionally the more polar component, is preferably present in the foam control composition at 10-200% by weight based on the organic liquid, most preferably 20 up to 100 or 120%.

The foam control compositions according to the invention may be made by combining the organic liquid, the hydrophobic filler, the branched siloxane resin and the polyol ester in any convenient way. The organic liquid, the hydrophobic filler and the organosilicon resin are preferably mixed together under shear. The polyol ester can be present during this mixing or can be added later, or part of the polyol ester cain be present during shear mixing and part can be added later. For example when the organic liquid is a hydrocarbon oil such as a paraffin oil, we have found that the best foam control results are achieved when the oil is blended with a paraffin wax, a branched siloxane resin and a filler and the resulting compound is mixed with a polyol ester of melting point between 40 and 90°C. Where the filler needs to be made hydrophobic in situ, the manufacturing process includes a heating stage, preferably under reduced pressure, in which the filler and the treating agent are mixed together in part or all of the organic liquid in the presence of a suitable catalyst if required.

The foam control composition of the present invention is supported on a particulate carrier, particularly when the composition is to be used in a powdered product such as a detergent powder. Examples of carriers and/or supports are zeolites, for example Zeolite A or Zeolite X, other aluminosilicates or silicates, for example magnesium silicate, phosphates, for example powdered or granular sodium tripolyphosphate, sodium sulphate, sodium carbonate, for example anhydrous sodium carbonate or sodium carbonate monohydrate, sodium perborate, a cellulose derivative such as sodium carboxymethylcellulose, granulated starch, clay, sodium citrate, sodium acetate, sodium bicarbonate, sodium sesquicarbonate and native starch. The organic liquid containing the hydrophobic filler, the branched siloxane resin and the non-polar additive is preferably deposited on the carrier particles in non-aqueous liquid form, for example a temperature in the range 40-100°C. In an alternative process, the organic liquid, the hydrophobic filler, the organosilicon resin and the additive composition arc emulsified in water and the resulting aqueous emulsion is deposited on the carrier particles. The supported foam control composition is preferably made by an agglomeration process in which the foam control composition is sprayed onto the carrier particles while agitating the particles. The particles are preferably agitated in a high shear mixer through which the particles pass continuously. In one preferred process, the particles are agitated in a vertical, continuous high shear mixer in which the foam control composition is sprayed onto the particles. One example of such a mixer is a Flexomix mixer supplied by Hosokawa Schugi.

The supported foam control composition additionally includes a water-soluble or water-dispersible binder to improve the stability of the particles. Examples of binders arc polycarboxylates, for example polyacrylic acid or a partial sodium salt thereof or a copolymer of acrylic acid, for example a copolymer with maleic anhydride, polyoxyalkylene polymers such as polyethylene glycol, which can be applied molten or as an aqueous solution and spray dried, reaction products of tallow alcohol and ethylene oxide, or cellulose ethers, particularly water-soluble or water-swellable cellulose ethers such as sodium carboxymethylcellulose, or sugar syrup binders. The water-soluble or water-dispersible binder can be mixed with the foam control composition before being deposited on the carrier, but preferably is separately deposited on the carrier particles. In one preferred procedure the foam control composition is deposited on the carrier particles as a non-aqueous liquid at a temperature in the range 40-100°C and the water-soluble or water-dispersible binder is at the same time or subsequently, or at both times, deposited on the carrier from a separate feed as an aqueous solution or dispersion.

The supported foam control composition may optionally contain a surfactant to aid dispersion of the foam control composition in the binder and/or to help in controlling the "foam profile", that is in ensuring that some foam is visible throughout the wash without overfoaming. Examples of surfactants include silicone glycols, or fatty alcohol ether sulphate or linear alkylbenzene sulphonate, which may be preferred with a polyacrylic acid binder. The surfactant can be added to the foam control composition undiluted before the silicone is deposited on the carrier, or the surfactant can be added to the binder and deposited as an aqueous emulsion on the carrier.

The foam control agents according to this invention are useful for reducing or preventing foam formation in aqueous systems, including foam generated by detergent compositions during laundering and foam generated in such processes as paper making and pulping processes, textile dyeing processes, cutting oil, coatings and other aqueous systems where surfactants may produce foam.

The following examples illustrate the invention. All parts and percentages are expressed by weight unless otherwise stated.

### Example 1

90% white mineral oil sold under the Trade Mark 'Kaydol' was blended with 6% 'Sipernat D10' (Trade Mark) hydrophobic treated silica and 4% of a MQ siloxane resin having a ratio of M groups to Q groups of 0.65 to form an anti foam composition C1.

65% composition C1 was mixed with 35% glyceryl tristearate to form Antifoam Composition 1 of the preset invention.

### Example 2

65% composition C1 was mixed with 35% Synchrowax HRC to form Antifoam Composition 2.

### Example 3 (reference)

65% composition C1 was mixed with 35% paraffin wax of melting point 54-56°C to form Antifoam Composition 3.

### Example 4

25% Kaydol white mineral oil was blended with 75% paraffin wax of melting point 54-56°C, 4% of the MQ siloxane resin of Example 1 and 6% 'Sipernat D10'. 65% of the resulting composition was mixed with 35% Synchrowax HRC to form Antifoam Composition 4.

### Example 5

The procedure of Example 4 was repeated to form Antifoam Composition 5, except that 40% Kaydol white mineral oil was initially blended with 60% of the paraffin wax.

In a comparative example, Example 4 was repeated to form antifoam composition C4, except that the Kaydol white mineral oil was wholly replaced by the paraffin wax of melting point 54-56°C.

### Example 6

90% rapeseed oil was blended with 6% Sipernat D10 and 4% of the MQ siloxane resin of Example 1 to form an antifoam composition C2.

65% composition C2 was mixed with 35% glyceryl tristearate to form Antifoam Composition 6 of the present invention.

### Example 7

65% composition C2 was mixed with 35% Synchrowax HRC to form Antifoam Composition 7.

### Example 8 (reference)

65% composition C2 was mixed with 35% paraffin wax of melting point 54-56°C to form Antifoam Composition 8.

Antifoam Compositions 1 to 8 and comparative antifoam compositions C1, C4 and C2 were each sprayed onto sodium carbonate powder in a granulating mixer to produce a supported foam control composition containing about 16% of the active foam control composition.

### Comparative Tests

Supported Antifoam Compositions 1 to 8 and supported comparative foam control agents C1 to C4 were tested in a powder detergent formulation which comprised 327 parts by weight zeolite, 95 parts of a 55% aqueous solution of sodium dodecylbenzenesulphonate, 39 parts ethoxylated lauryl stearyl alcohol, 39 parts sodium sulphate, 125 parts sodium carbonate and 125 parts sodium perborate. Comparative foam control agent C3 was a commercially used foam control composition based on a polydiorganosiloxane fluid containing hydrophobic silica applied to a sodium carbonate carrier. Each supported foam control composition was used at about 1% by weight of the detergent powder (0.15% by weight active foam control compound based on detergent powder). The evaluation was made in a Miele 934 front loading washing machine, loaded with 16 cotton towels, 100g of the detergent formulation, 17 litres of water of 9 degree German hardness using a wash cycle of 65 minutes at 40°C or 95°C. The foam height was measured every 5 minutes during the wash cycle and recorded, where the value indicated is the foam height in the washing machine, with 100% referring to the fact that the window of the machine was full of foam, 50%, that is was half full of foam. The results are described in Table 1 below.

**Table 1**

| | | | **% Foam height with time (mins)** | | | | | | | | | | | | | |
|---|---|---|---|---|---|---|---|---|---|---|---|---|---|---|---|---|
| **Composition** | **% Active** | **Temp C** | **0** | **5** | **10** | **15** | **20** | **25** | **30** | **35** | **40** | **45** | **50** | **55** | **60** | **65** |
| 1 | 16.44 | 40 | 0 | 0 | 0 | 0 | 0 | 0 | 0 | 10 | 30 | 40 | 50 | 60 | 90 | 100 |
| 2 | 16.35 | 40 | 0 | 0 | 10 | 10 | 10 | 20 | 30 | 40 | 50 | 70 | 70 | 100 | 100 | 100 |
| 3 | 16.35 | 40 | 0 | 0 | 0 | 0 | 0 | 0 | 0 | 0 | 0 | 0 | 0 | 5 | 5 | 5 |
| 4 | 16.35 | 40 | 0 | 80 | 80 | 70 | 30 | 20 | 30 | 30 | 40 | 40 | 50 | 60 | 70 | 80 |
| 5 | 16.31 | 40 | 0 | 70 | 60 | 40 | 20 | 20 | 10 | 20 | 30 | 30 | 40 | 60 | 60 | 70 |
| C4 | 15.87 | 40 | 0 | 100 | 100 | 100 | 100 | 100 | 100 | 100 | 100 | 100 | 100 | 100 | 100 | 100 |
| 6 | 16.24 | 40 | 0 | 0 | 20 | 30 | 40 | 60 | 90 | 100 | 100 | 100 | 100 | 100 | 100 | 100 |
| 7 | 16.33 | 40 | 0 | 10 | 20 | 30 | 60 | 70 | 100 | 100 | 100 | 100 | 100 | 100 | 100 | 100 |
| 8 | 16.35 | 40 | 0 | 0 | 0 | 0 | 10 | 20 | 30 | 60 | 70 | 90 | 100 | 100 | 100 | 100 |
| 1 | 16.44 | 95 | 0 | 0 | 0 | 0 | 0 | 0 | 0 | 0 | 10 | 20 | 30 | 40 | 50 | 50 |
| 2 | 16.35 | 95 | 0 | 0 | 0 | 0 | 10 | 10 | 0 | 0 | 0 | 20 | 30 | 50 | 50 | 50 |
| 3 | 16.35 | 95 | 0 | 0 | 0 | 0 | 0 | 0 | 0 | 0 | 0 | 10 | 20 | 35 | 45 | 45 |
| 4 | 16.35 | 95 | 0 | 80 | 80 | 40 | 20 | 0 | 0 | 0 | 0 | 0 | 10 | 20 | 20 | 30 |
| 5 | 16.31 | 95 | 0 | 60 | 20 | 0 | 0 | 0 | 0 | 0 | 0 | 0 | 10 | 20 | 20 | 30 |
| C4 | 15.87 | 95 | 0 | 100 | 100 | 100 | 100 | 70 | 0 | 0 | 0 | 0 | 20 | 30 | 30 | 50 |
| 6 | 16.24 | 95 | 0 | 0 | 20 | 50 | 60 | 50 | 30 | 10 | 30 | 40 | 60 | 70 | 70 | 100 |
| 7 | 16.33 | 95 | 0 | 10 | 20 | 40 | 50 | 50 | 30 | 10 | 20 | 40 | 60 | 60 | 70 | 100 |
| 8 | 16.35 | 95 | 0 | 0 | 0 | 0 | 0 | 0 | 0 | 0 | 30 | 50 | 90 | 100 | 100 | 100 |
| C1 | 17.80 | 40 | 0 | 0 | 20 | 20 | 20 | 40 | 50 | 60 | 70 | 90 | 100 | 100 | 100 | 100 |
| C2 | 18.17 | 40 | 0 | 20 | 50 | 70 | 90 | 90 | 100 | 100 | 100 | 100 | 100 | 100 | 100 | 100 |
| C1 | 17.80 | 95 | 0 | 0 | 10 | 30 | 20 | 20 | 30 | 30 | 60 | 90 | 100 | 100 | 100 | 100 |
| C2 | 18.17 | 95 | 0 | 10 | 50 | 80 | 90 | 100 | 100 | 100 | 100 | 100 | 100 | 100 | 100 | 100 |
| C3 | 18.53 | 40 | 0 | 0 | 10 | 40 | 50 | 80 | 100 | 100 | 100 | 100 | 100 | 100 | 100 | 100 |
| C3 | 18.53 | 95 | 0 | 0 | 10 | 30 | 50 | 60 | 100 | 100 | 100 | 100 | 100 | 100 | 100 | 100 |

The results for Antifoam Compositions 1 and 2 compared to C1 show that addition of a polyol ester such as a triglyceride to a mineral oil antifoam compound containing branched siloxane resin and hydrophobic silica filler just prior to granulation on a carrier enhances the foam control by the mineral oil antifoam compound in the 40°C wash cycle and especially the 95°C wash cycle.

The results for Antifoam Compositions 6 and 7 compared to C2 show that addition of a polyol ester such as a triglyceride to a vegetable oil antifoam compound containing branched siloxane resin and hydrophobic silica filler just prior to granulation on a carrier enhances the foam control by the vegetable oil antifoam compound in the 40°C wash cycle and especially the 95°C wash cycle.

The results for Antifoam Compositions 3 and 8 compared to C1 and C2 show that addition of a paraffin wax (melting point 54-56°C) to either the mineral oil antifoam compound or the rapeseed oil antifoam compound just prior to granulation on a carrier enhances the performance of each antifoam compound in both the 40°C wash cycle and the 95°C wash cycle. This is despite the fact that the wax is below its melting point throughout the whole of the 40°C wash and the first 30 minutes of the 95°C wash cycle.

The poor results shown by comparative foam control composition C4 confirm that the organic liquid must be present as well as wax for the compound to be an effective foam control agent. Using C4, foam control performance is initiated at or close to the onset of liquefaction of the wax at 30 mins into the 95°C wash cycle and no foam control performance in the 40°C wash cycle.

The Antifoam Compositions 4 and 5, where the compound contains a mixture of paraffin oil and paraffin wax in conjunction with MQ resin and hydrophobic silica (#4 and #5) with post-addition of a triglyceride prior to granulation onto a carrier, are especially preferred because the foam profile in the 40°C is relatively uniform through the wash cycle and good foam control is also achieved at 95°C. Further modification of the foam profile can be achieved by varying the mineral oil and paraffin wax ratio in the compound.

### Example 9

90% of a paraffin wax liquid paraffin mixture was blended with 6% Sipernat D10 and 4% of the MQ siloxane resin of Example 1 to form Antifoam Composition 9. Antifoam Composition 9 was deposited onto a sugar carrier to produce a supported foam control composition.

### Example 10

65% Antifoam Composition 9 was mixed with 35% Synchrowax HRC to form Antifoam Composition 10.

### Example 11

65% Antifoam Composition 9 was mixed with 28% Synchrowax HRC and 7% octylphenol to form Antifoam Composition 11.

### Example 12

65% Antifoam Composition 9 was mixed with 35% glyceryl monostearate (90% pure) to form Antifoam Composition 12.

Antifoam Compositions 10 to 12 were each sprayed onto sodium carbonate powder in a granulating mixer to produce a supported foam control composition containing about 16% of the active foam control composition.

Supported Antifoam Compositions 9 to 12 and supported comparative foam control agents D1 to D3 were tested in comparative wash tests under the conditions described above. The comparative foam control agents were commercially used supported foam control compositions based on polydiorganosiloxane fluids containing hydrophobic silica. D1 and D2 used a zeolite carrier and D3 used a starch carrier. The results are shown in Table 2 below.

**Table 2**

| | | | **% Foam height with time (mins)** | | | | | | | | | | | | | |
|---|---|---|---|---|---|---|---|---|---|---|---|---|---|---|---|---|
| **Composition** | **% Active** | **Temp C** | **0** | **5** | **10** | **15** | **20** | **25** | **30** | **35** | **40** | **45** | **50** | **55** | **60** | **65** |
| 9 | | 40 | 0 | 100 | 100 | 100 | 30 | 10 | 10 | 20 | 30 | 30 | 40 | 50 | 60 | 60 |
| 10 | 16.56 | 40 | 0 | 70 | 55 | 45 | 15 | 10 | 10 | 15 | 20 | 25 | 30 | 35 | 45 | 45 |
| 11 | 16.40 | 40 | 0 | 40 | 20 | 10 | 0 | 0 | 0 | 0 | 10 | 10 | 20 | 20 | 30 | 30 |
| 10 | 16.56 | 95 | 0 | 90 | 90 | 90 | 80 | 50 | 10 | 0 | 0 | 0 | 10 | 10 | 30 | 30 |
| 11 | 16.40 | 95 | 0 | 70 | 40 | 20 | 10 | 0 | 0 | 0 | 0 | 10 | 20 | 30 | 40 | 40 |
| 12 | 16.37 | 40 | 0 | 70 | 90 | 80 | 50 | 70 | 70 | 80 | 100 | 100 | 100 | 100 | 100 | 100 |
| D1 | 11.50 | 40 | 0 | 5 | 30 | 50 | 70 | 90 | 100 | 100 | 100 | 100 | 100 | 100 | 100 | 100 |
| D2 | 11.12 | 40 | 0 | 0 | 0 | 0 | 0 | 0 | 0 | 5 | 20 | 25 | 35 | 45 | 50 | 50 |
| D3 | 14.00 | 40 | 0 | 0 | 0 | 0 | 0 | 0 | 0 | 0 | 0 | 5 | 10 | 20 | 30 | 40 |
| 12 | 16.37 | 95 | 0 | 80 | 90 | 80 | 60 | 50 | 40 | 50 | 30 | 50 | 70 | 80 | 90 | 100 |
| D1 | 11.50 | 95 | 0 | 0 | 40 | 60 | 90 | 90 | 100 | 100 | 100 | 100 | 100 | 100 | 100 | 100 |
| D2 | 11.12 | 95 | 0 | 0 | 0 | 0 | 0 | 0 | 10 | 10 | 10 | 10 | 20 | 10 | 0 | 0 |
| D3 | 14.00 | 95 | 0 | 0 | 0 | 0 | 0 | 0 | 0 | 50 | 100 | 100 | 100 | 100 | 100 | 100 |

The result for Composition 9 shows that an antifoam composition comprising a paraffin wax liquid paraffin mixture blended with hydrophobic silica and a branched siloxane resin of Example 1 is an effective antifoam, particularly in the later stages of the wash. The results for Compositions 10 and 11 show that addition of a non-polar polyol ester such as a glycerol triester further improves the foam control. Composition 10 is of particular interest as the foam profile obtained is very different from that obtained with current commercial foam control granules. A detergent manufacturer might consider that this better matches consumer foam profile preferences. The results for Composition 12 show that a more polar organic compound such as a glycerol monoester gives little improvement to an antifoam composition comprising a paraffin wax liquid paraffin mixture, hydrophobic silica and a branched siloxane resin although the more polar organic compound may improve the foam control of an antifoam composition comprising a liquid paraffin, a non-polar polyol ester, hydrophobic silica and a branched siloxane resin.

## Claims

1. A granulated foam control agent comprising: a foam control composition comprising (i) a nos-silicon-containing organic liquid selected from the group consisting of hydrocarbon oils and vegetable oils, (ii) a branched siloxane resin, (iii) a particulate filler which is insoluble in the organic liquid, (iv) an additive composition comprising a polyol ester which is a polyol substantially fully esterified by carboxylate groups each having 7 to 36 carbon atoms; a particulate carrier supporting the foam control composition; and a water soluble or water-dispersible binder deposited on the particulate carrier.

2. A granulated foam control agent according to Claim 1 **characterized in that** the additive composition comprises 5-95 parts by weight of the polyol ester, and 5-95 parts by weight of a component which is miscible in its molten state with the polyol ester, and is more polar than the polyol ester, at least one of the polyol ester and the more polar component being miscible with the organic liquid.

3. A granulated foam control agent according to Claim 2 **characterized in that** the additive composition is present at 20-200% by weight based on the organic liquid.

4. A granulated foam control agent according to Claim 1 **characterized in that** the branched siloxane resin consists of monovalent trihydrocarbonsiloxy (M) groups of the formula R"₃SiO_{1/2} and tetrafunctional (Q) groups SiO_{4/2} wherein R" denotes an alkyl group and the number ratio of M groups to Q groups is in the range 0.4:1 to 1:1:1.

5. A granulated foam control agent according to Claim 4 **characterised in that** the branched siloxane resin is present at 2 to 10% by weight based on the organic liquid.

6. A granulated foam control agent according to Claim 1 **characterized in that** the particular filler is a silica filler with an average particle size of from 0.5 to 30µm.

7. A granulated foam control agent according to Claim 6 **characterized in that** the particulate filler is present at 2 to 10% by weight based on the organic liquid.

## Patentansprüche

1. Granuliertes Schaumregulierungsmittel enthaltend: eine Schaumregulierungszusammensetzung, die (i) eine nicht siliciumhaltige organische Flüssigkeit, ausgewählt aus der Gruppe bestehend aus Kohlenwasserstoffölen und Pflanzenölen, (ii) ein verzweigtes Siloxanharz, (iii) einen teilchenförmigen Füllstoff, der in der organischen Flüssigkeit unlöslich ist, (iv) eine Additivzusammensetzung, die einen Polyolester enthält, der ein Polyol ist, das im Wesentlichen vollständig mit Carboxylatgruppen, die jeweils 7 bis 36 Kohlenstoffatome aufweisen, verestert ist, enthält; einen teilchenförmigen Träger, der die Schaumregulierungszusammensetzung trägt, und ein wasserlösliches oder wasserdispergierbares Bindemittel, das auf dem teilchenförmigen Träger abgeschieden ist.

2. Granuliertes Schaumregulierungsmittel gemäß Anspruch 1, **dadurch gekennzeichnet, dass** die Additivzusammensetzung 5 bis 95 Gewichtsteile des Polyolesters und 5 bis 95 Gewichtsteile einer Komponente enthält, die in ihrem geschmolzenen Zustand mit dem Polyolester mischbar ist und polarer als der Polyolester ist, wobei mindestens eines von dem Polyolester und der polareren Komponente mit der organischen Flüssigkeit mischbar ist.

3. Granuliertes Schaumregulierungsmittel gemäß Anspruch 2, **dadurch gekennzeichnet, dass** die Additivzusammensetzung zu 20 bis 200 Gew.-%, bezogen auf die organische Flüssigkeit, vorhanden ist.

4. Granuliertes Schaumregulierungsmittel gemäß Anspruch 1, **dadurch gekennzeichnet, dass** das verzweigte Siloxanharz aus monovalenten Trihydrocarbonsiloxy-(M)-Gruppen der Formel R"₃SiO_{1/2} und tetrafunktionellen (Q)-Gruppen SiO_{4/2} besteht, wobei R" eine Alkylgruppe bedeutet und das Zahlenverhältnis von M-Gruppen zu Q-Gruppen im Bereich von 0,4:1 bis 1,1:1 liegt.

5. Granuliertes Schaumregulierungsmittel gemäß Anspruch 4, **dadurch gekennzeichnet, dass** das verzweigte Siloxanharz zu 2 bis 10 Gew.-%, bezogen auf die organische Flüssigkeit, vorhanden ist.

6. Granuliertes Schaumregulierungsmittel gemäß Anspruch 1, **dadurch gekennzeichnet, dass** der teilchenförmige Füllstoff ein Siliciumdioxidfüllstoff mit einer mittleren Teilchengröße von 0,5 bis 30 µm ist.

7. Granuliertes Schaumregulierungsmittel gemäß Anspruch 6, **dadurch gekennzeichnet, dass** der teilchenförmige Füllstoff zu 2 bis 10 Gew.-%, bezogen auf die organische Flüssigkeit, vorhanden ist.

## Revendications

1. Agent de régulation de mousse granulaire comprenant : une composition de régulation de mousse comprenant (i) un liquide organique non siliconé choisi dans le groupe constitué par les huiles hydrocarbonées et les huiles végétales, (ii) une résine de siloxane ramifié, (iii) une charge particulaire qui est insoluble dans le liquide organique, (iv) une composition d'additif comprenant un ester de polyol qui est un polyol presque complètement estérifié par des groupes carboxylate ayant chacun de 7 à 36 atomes de carbone ; un support particulaire supportant la composition de régulation de mousse ; et un liant soluble dans l'eau ou dispersible dans l'eau déposé sur le support particulaire.

2. Agent de régulation de mousse granulaire selon la revendication 1, **caractérisé en ce que** la composition d'additif comprend 5 à 95 parties en poids de l'ester de polyol et 5 à 95 parties en poids d'un composant qui est miscible, à l'état fondu, avec l'ester de polyol, et qui est davantage polaire que l'ester de polyol, au moins l'un parmi l'ester de polyol et le composant davantage polaire étant miscible avec le liquide organique.

3. Agent de régulation de mousse granulaire selon la revendication 2, **caractérisé en ce que** la composition d'additif est présente à raison de 20 à 200 % en poids par rapport au liquide organique.

4. Agent de régulation de mousse granulaire selon la revendication 1, **caractérisé en ce que** la résine de siloxane ramifié est constituée de groupes trihydrocarbosiloxy (M) de formule R"₃SiO_{1/2} et de groupes tétrafonctionnels (Q) SiO_{4/2} où R" désigne un groupe alkyle et le rapport en nombre des groupes M aux groupes Q est situé dans la plage allant de 0,4/1 à 1,1/1.

5. Agent de régulation de mousse granulaire selon la revendication 4, **caractérisé en ce que** la résine de siloxane ramifié est présente à raison de 2 à 10 % en poids par rapport au liquide organique.

6. Agent de régulation de mousse granulaire selon la revendication 1, **caractérisé en ce que** la charge particulaire est une charge de silice ayant une granulométrie moyenne de 0,5 à 30 µm.

7. Agent de régulation de mousse granulaire selon la revendication 6, **caractérisée en ce que** la charge particulaire est présente à raison de 2 à 10 % en poids par rapport au liquide organique.
